(19)

Europäisches
Patentamt
European
Patent Office
Office européen
des brevets

(11)  **EP 3 838 505 A1**

(12)  **EUROPEAN PATENT APPLICATION**

(43) Date of publication:
**23.06.2021  Bulletin 2021/25**

(51) Int Cl.:
**B25J 9/16** *(2006.01)*          **G05B 13/02** *(2006.01)*

(21) Application number: **19219055.1**

(22) Date of filing: **20.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicants:
  • **Robert Bosch GmbH**
    **70442 Stuttgart (DE)**
  • **Carnegie Mellon University**
    **Pittsburgh, PA 15213 (US)**

(72) Inventors:
  • **Kolter, Jeremy Zieg**
    **Pittsburgh, Pennsylvania 15217 (US)**

  • **Reeb, David**
    **71272 Renningen (DE)**
  • **Roderick, Melrose**
    **Pittsburgh, Pennsylvania PA15213 (US)**
  • **Nagarajan, Vaishnavh**
    **Pittsburgh, Pennsylvania PA15213 (US)**

(74) Representative: **Bee, Joachim**
    **Robert Bosch GmbH**
    **Zentralabteilung Patente**
    **Postfach 30 02 20**
    **70442 Stuttgart (DE)**

Remarks:
Amended claims in accordance with Rule 137(2) EPC.

(54)  **INTERACTING WITH AN UNSAFE PHYSICAL ENVIRONMENT**

(57)    The invention relates to a computer-implemented method (700) of configuring a system which interacts with a physical environment. An action of the system in a state of the physical environment results in an updated state of the physical environment according to a transition probability. A safe set of state-action pairs known to be safely performable and an unsafe set of state-action pairs to be avoided are indicated. During an environment interaction, a safe set of state-action pairs is updated by estimating a transition probability for a state-action pair based on an empirical transition probability of a similar other state-action pair, and including the state-action pair in the safe set of state-action pairs only if the state-action pair is not labelled as unsafe and the safe set of state-action pairs can be reached with sufficient probability from the state-action pair based on the estimated transition probability.

Fig. 6

EP 3 838 505 A1

**Description**

**FIELD OF THE INVENTION**

The invention relates to a computer-implemented method of configuring a system which interacts with a physical environment, and to a corresponding configuration system. The invention further relates to a computer-readable medium.

**BACKGROUND OF THE INVENTION**

Robotics is an important technical field that is being applied in practice more and more often. Robots, or more broadly, computer-controlled systems, are used for example in logistics and storage facilities to insert and pick out items; in manufacturing plants to perform various parts of manufacturing processes. Also in traffic, semi-autonomous or fully autonomous vehicles are being used in practice more and more. As computer-controlled systems are being applied in more and more complex environments to perform more and more complex tasks, it is becoming less and less feasible to explicitly program the robot's behaviour. Instead, robots are often configured by letting them learn, using machine learning techniques, from performing real interactions with the environment. Specifically, computer-controlled systems may be trained to interact with a physical environment according to a so-called policy which selects an action to be performed by the system based on a measurement of the current state of the physical environment.

Interaction systems that interact with a physical environment may be configured by letting the interaction system learn from real-world interactions with the physical environment. In such cases, it is often important to avoid that the interaction system performs dangerous actions, e.g., an action that may cause an automated vehicle to bump into an object, or an action that may cause a manufacturing robot to damage an object being manufactured, etcetera. Apart from the possibility of damage to the robot and other equipment, in various settings a system may also interact with a physical environment involving people, in which case it is particularly important to avoid actions that are dangerous to these human beings. For example, in the setting of a Markov Decision Process, such dangerous situations may be represented by a negative reward.

In the paper "An analysis of model-based Interval Estimation for Markov Decision Processes" by A. Strehl and M. Littman in Journal of Computer and System Sciences 74 (2008) 1309-1331 (incorporated herein by reference), a method called "Model-Based Interval Estimation" (MBIE) is presented for learning a policy. MBIE keeps track of empirical transition probabilities of an action in a state resulting in another state. Based on these transition probabilities, the discounted, infinite-horizon value function representing the expected reward from taking respective actions is estimated, and the action with the highest action-value estimate is selected. MBIE does not take safety into account. Accordingly, when using MBIE to let an interaction system learn from real-world environment interactions, it may not be possible to avoid that the interaction system performs dangerous actions.

**SUMMARY OF THE INVENTION**

In accordance with a first aspect of the invention, a computer-implemented method of configuring a system which interacts with a physical environment is described, as defined by claim 1. In accordance with a further aspect of the invention, a configuration system for configuring an interaction system which interacts with a physical environment is described, as defined by claim 14. In accordance with an aspect of the invention, a computer-readable medium is described as defined by claim 15.

When interacting with a physical environment, an action of the system in a state of the physical environment may result in an updated state of the physical environment. In various embodiments, an unsafe set of state-action pairs to be avoided when interacting with the environment may be identified. For example, such state-action pairs may lead to damage relatively directly. However, as the inventors realized, if a state-action pair is not in the unsafe set, it may not necessarily be safe to perform the action. For example, the action may lead to a state from which only unsafe actions are available, or at least from which no actions are available that are known to be safe.

Accordingly, during training and/or use of an interaction system, both an unsafe set of state-action pairs and a safe set of state-action pairs may be maintained, and updated based on environment interaction experiences. To this end, the inventors envisaged to transfer knowledge from state-action pairs that are known to be safe to state-action pairs that are not yet known to be safe. In particular, *empirical* transition probabilities of an action in a safe state leading to a subsequent state, may be used to determine *estimated* transition probabilities for similar state-action pairs that are not yet known to be safe. Accordingly, unsafe state-action pairs may advantageously be avoided not just when using the interaction system but also when configuring it, while allowing the safe set of state-action pairs to be progressively extended.

Generally, various embodiments relate to the configuration of a system which interacts with a physical environment. Such an interaction system may be trained, for example, in a controlled test environment, for a later deployment.

However, it is also possible that the interaction system is already deployed, in which case the training may comprise refining pre-trained parameters. For example, once deployed, the system may continue to gain experience of interacting with the environment that can be used, e.g., to further improve the way the system performs its tasks.

As described herein, an interaction of the system with the physical environment may comprise the system performing a certain action in a certain state of the physical environment. The state of the physical environment may refer to a set of information about the physical environment available to the system interacting with it, e.g., obtained from sensors such as a camera, a tachometer, or GPS receiver. The action may be performed by the system using one or more actuators, e.g., by determining a control signal for the actuators based on the action to be performed. In various embodiments, both the set of actions and the set of states may be finite, e.g., the state of the physical environment may be obtained by discretizing sensor signals. It may be assumed that performing the action results in an updated state of the physical environment according to unknown, stochastic dynamics, in other words, according to a transition probability that is unknown to the interaction system. However, transition probabilities may be assumed to remain substantially the same throughout the use of the system. Typically, at least one transition probability is neither zero nor one, but, e.g., between 0.1 and 0.9 or even between 0.2 and 0.8. For example, the physical system may not be modelled by a deterministic transition function. In many cases, a stochastic model of the physical environment may be more realistic than a deterministic model.

The use of physical environment models based on transition probabilities is known per se, for example, in systems that base their actions on a Markov Decision Process (MDP) model of reality. Such a model additionally comprises a given reward function indicating a desirability of performing a given action in a given state. However, physical environment models based on transition probabilities are also useful without such a reward function, e.g., for systems that simply attempt to gain information about the physical environment without necessarily trying to achieve a particular goal.

As the inventors realized, if a state-action pair is not included in the unsafe set of state-action pairs, then this may not necessarily imply that it is safe to execute that action. For example, the unsafe set may provide momentarily unsafe state-action pairs, e.g., state-action pairs that are likely to lead, directly or in a short amount of time, to some kind of undesirable situation such as damaged equipment. In such cases, although taking an action that is not labelled as unsafe may be safe in the short run, this may not be safe over a longer time period, e.g., as a result of taking the action, the system may directly or indirectly end up in a state from which all possible actions are labelled unsafe, or more generally, from which no action exists that is known with sufficient confidence to be safe. Labelling such a set of momentarily unsafe state-action pairs may be feasible, e.g., in many cases such a set may be predefined.

On the other hand, especially during training, in many practical situations it may not be feasible to obtain beforehand a sufficiently exhaustive set of state-action pairs that are guaranteed to be safe in the long run. Indeed, knowing beforehand which state-action pairs are safe in the long run may effectively require to know transition probabilities of the physical environment, information that is typically only learned during the configuration of the interaction system. An initial set of state-action pairs that are safe in the long run may be available, e.g., safe state-action pairs for a part of the physical environment, e.g., immediate surroundings of an initial state reachable by taking a relatively small number of actions. But beyond that, it may not be known whether a particular action performed in a particular state is safe or not. Still, it is often beneficial to be able to perform such actions that are not initially known to be safe, especially also during training. For example, in order to reach a goal, a manufacturing robot may need to come close to or touch an object it is supposed to work with, even if the robot may not initially know how fast it will move towards the object by performing a certain action.

In various embodiments, to ensure safety, the configuration of an interaction system may involve maintaining a safe set of state-action pairs. State-action pairs from the safe set may be known to be safely performable, e.g., safely performable in the long run, in the sense that the safe set does not contain state-action pairs labelled as unsafe and, whenever an action from the safe set is performed, this may be likely, e.g., with probability greater than a given threshold, to result in a state from which another action from the safe set is available. This latter property may be referred to throughout as "closedness" of the safe set. Interestingly, in many embodiments, a safe set is maintained that is not static. Instead, the inventors found ways to updated the safe set, e.g., an initial safe set, as additional information about environment interactions is obtained, without however having to take actions outside of the safe set.

As the inventors realized, in many cases, inclusion of a state-action pair in the safe set may be hampered due to a lack of information about that state-action pair, e.g., a lack of information about transition probabilities for that state-action pair which is sufficiently reliable to conclude that the safe-action pair is safe in the long run. Interestingly, the inventors realized that, in many practical settings, transition probabilities of state-action pairs in one part of the state-action space may be expected to be similar to transition probabilities of state-action pairs in another part of the state-action space. For example, the result of taking an action to move an autonomous device may be assumed to be dependent largely on local conditions such as the type or incline of the surface on which it moves, regardless of the absolute location. Particularly, state-action pairs may be similar in terms of their expected transition probabilities regardless of whether the state-action pairs themselves or state-action pairs of close states are labelled as unsafe or not. For example, the positional effect of moving an autonomous vehicle around may be independent of whether there are any dangerous objects in the neighbourhood. As the inventors realized, in such cases, experience gained in a part of the state-action space without dangerous objects may be transferred to another part of the state-action space with dangerous objects. Moreover, in various embodiments, it is enabled to dynamically switch between exploring parts of the state-space relevant to achieving a goal and exploring safe parts that help to gain the experience needed to safely perform such goal-oriented learning.

Specifically, in various embodiments, a transition probability for a state-action pair may be estimated based on an empirical transition probability of a similar other state-action pair. Based on estimated transition probability, it may be concluded that the action from the analogous state is unlikely to result in a state labelled as unsafe. For example, an autonomous device may learn to move around on a certain type of surface far away from any object to be avoided, and use this knowledge when moving around close to an object to be avoided, for example, to conclude that it is possible to safely move closer the object without substantial risk of a collision. As another concrete example, consider training a robot to make a tight-rope walk between two high buildings. In such a case, losing balance would damage or destroy the robot. However, the effect of taking an action in this dangerous environment may be expected to be substantially the same as taking an analogous action in the situation where the rope is only a few centimetres above the ground, where a fall of the rope may not damage the robot. Accordingly, the robot may be configured by letting it perform interactions in the safe part of the physical environment first until this experience allows to establish with sufficient confidence that taking analogous actions in another part of the environment is also safe, at which point the other part of the environment may be explored or exploited.

In various embodiments, during training and/or use, only actions from the safe set of state-action pairs may be performed. Empirical transition probabilities of such state-action pairs may then be used to estimate transition probabilities of other state-action pairs, for example, that are not known to be safe. The use of empirical transition probabilities of safe state-action pairs to estimate transition probabilities of other states may be referred to as Analogous Safe-state Exploration (ASE). However, it will be understood that if, for any reason, empirical transition probabilities are available for states that are not in the safe set, these empirical transition probabilities can be used for the estimation as well. Transition probabilities for a state-action pair can also be based on the empirical transition probabilities of the state-action pair itself, but interestingly, at least in one iteration for one state-action pair, an empirical transition probability of another state-action pair may be used.

Interestingly, based on determining an estimated transition probability for a state-action pair, this state-action pair may be included in the safe set of state-action pairs. For example, for a state-action pair to be included, this state-action pair may not be labelled as unsafe, and moreover, it may be determined, based estimated transition probabilities, that the safe set of state-action pairs can be reached with sufficient probability from this state-action pair. In other words, in respective states that may result from taking the action in the state, it may be possible to select respective actions that, with sufficient probability, lead to states from the safe set. Here, the "sufficient probability" may represent a, typically application-dependent, acceptable risk of dangerous actions being performed during training and/or use.

For example, in various embodiments, the interaction system may be trained to achieve a particular goal, and accordingly, it may be desirable to perform various actions to achieve that goal. In various embodiments, such actions are only performed when they are comprised in the safe set of state-action pairs. If an action from a current state is not comprised in the safe set of state-action pairs, then another action from the safe set of state-action pairs may be selected, preferably an action that helps towards achieving the goal, for example, by informing safety of desirable actions. For example, if insufficient empirical evidence is available to conclude that a desirable state-action pair is safe, a similar action from a similar state may be performed instead to allow more accurate transition probabilities to be estimated for the desirable state-action pair, and thus to possibly allow adding the desirable state-action pair to the safe set.

Generally, also in non-goal-oriented environments, analogous safe-state exploration may allow the interaction system to perform actions in the physical environment sufficiently safely while still allowing state-action pairs that were not initially known to be safe to be performed. For example, by exploiting such analogies between state-action pairs, exploration may be guided towards relevant states while simultaneously guaranteeing safety with high probability. As a consequence, a larger part of the state space may be safely explored. In particular, in case interactions are according to a reward function, an expected reward of interacting with the system may be increased compared to performing only actions from an initial safe set. In other words, the interaction system may be able to perform its tasks more efficiently and/or more accurately, or even to perform tasks for which predefining a safe set of state-action pairs may not be feasible at all. Interestingly, safety may be guaranteed not only in use but also during training. Also, the required a priori knowledge of system dynamics may be reduced, e.g., because of estimation of transition probabilities. For example, not even a parametrized version of the transition function may need to be known, the construction a priori of which is usually difficult. Accordingly, interacting with physical systems may be enabled for a broader range of situations where exact dynamics are initially unknown.

Optionally, the interaction with the physical system that takes place may be for interacting according to a reward function. For example, an action may be selected for maximizing an expected reward, e.g., an expected accumulated reward. The reward function may be known to the system selecting the actions, e.g., predefined. The reward function may also define which state-action pairs are labelled as unsafe, e.g., a state-action pair may be labelled unsafe if it has a negative reward. Various techniques for reward-based interaction with physical environments are known per se, e.g., from reinforcement learning, and can be applied here. In an iteration of the interaction, a goal-oriented action to be performed in the current state of the physical environment may be determined based on the reward function. Interestingly, this determined interaction may be selected for being performed only if the action in the current state of the physical environment is comprised in the safe set of state-action pairs. This way, exploring towards a goal may be balanced with ensuring safety during the exploration. Accordingly, safety may be assured while still achieving a relatively high sample efficiency. The function selecting an action to be performed based on the reward function is commonly known as a policy.

Effectively, the interaction with the physical environment may be based on two estimates of the true system dynamics. Empirical transition probabilities may be used for goal-based exploration, but used only if its suggested action is in the safe set. In that sense, the empirical transition probabilities may be regarded as an optimistic estimate of the system dynamics. Estimated transition probabilities may be used for adding state-action pairs to the safe set, but only if it is possible with sufficient probability to return to the safe set after taking that action. In that sense, the estimated transition probabilities may be regarded as a pessimistic estimate of the system dynamics.

In various embodiments for interaction according to a reward function, it can even be shown that the policy for selecting an action to be performed is a so-called optimal policy in the PAC-MDP sense, while still guaranteeing safety. This definition of optimality provides, in a mathematical sense, guarantees about the effectiveness of the actions being performed with respect to the reward function. Although providing such a mathematical guarantee is generally beneficial, in practice, also embodiments that do not attain this mathematical guarantee may be beneficial in terms of safety and/or effectiveness.

Optionally, a set of goal state-action pairs reachable by performing goal-oriented actions may be determined. The goal-oriented action may be performed only if each goal state-action pair is comprised in the safe set of state-action pairs, e.g., as opposed to just checking that the current state-action pair is comprised in the safe set of state-action pairs. The inventors found that this may avoid situations, possible otherwise, where goal-oriented actions would be selected until the edge of the safe set of state-action pairs is reached, at which point a step back into the safe set of state-action pairs may be selected, after which again a step for going to the edge may be taken, etcetera. Accordingly, the probability of getting stuck without reaching a goal may be reduced.

Optionally, a similar state-action pair may be determined that is similar to a goal-oriented state-action pair not comprised in the safe set, and transition probabilities for the goal-oriented state-action pair may be estimated based on empirical transition probabilities of the similar state-action pair. Accordingly, a better estimate of the transition probability for the goal-oriented state-action pair may be obtained which may enable to add the goal-oriented state-action pair to the safe set. For example, a goal-oriented action or set of actions may be determined and, if it is found that no goal-oriented action can be performed, instead a similar state-action pair may be selected that allows transition probabilities of a goal-oriented action to be refined. For example, an action from the safe set of state-action pairs providing a highest estimated transition probability of arriving at or moving towards the set of goal state-action pairs, may be selected. In such cases, even if performing a goal-oriented action may not be possible, at least progress towards the goal may be achieved by specifically targeting actions for moving closer to the set of goal state-action pairs, e.g., leading to a higher expected reward.

Instead or in addition, a similar state-action pair may be determined that is similar not to the goal-oriented state-action pair, but to a return state-action pair on a return path from the goal-oriented state-action pair to the safe set. For example, it may not be safe to add the goal-oriented state-action pair to the safe set because it may not be established yet that the safe set of state-action pairs can be reached with sufficient probability from the state-action pair. By selecting the state-action pair to be similar to the return state-action pair, more accurate estimates of the transition probabilities for the return pair may be determined, so that the goal-oriented state-action pair may be included in the safe set.

Optionally, a return state-action pair may be selected for returning to the set of goal state-action pairs. For example, it may be the case that it is possible to perform a goal-oriented action from the safe set of state-action pairs, but not from the current state. For example, this can happen if a previously selected state-action pair was a similar state-action pair as described before. In such cases, by selecting a return state-action pair, quicker progress towards the goal may be achieved. It is also possible that in one or more iterations a similar state-action pair is selected and in one or more other iterations a return state-action pair is selected.

Although a goal-oriented action may be performed whenever this is possible, e.g., whenever the goal-oriented action is in the safe set or each goal state-action pair is in the safe set, this is not needed. For example, in one or more iterations a goal-oriented action may be selected and in one or more other iterations a non-goal-oriented action may be selected, e.g., a random action from the safe set of an action targeted towards exploring a previously unexplored part of the physical environment. Employing such mixed strategies may allow avoiding to get stuck in a certain part of the state space where no further progress is made.

Optionally, an action may be determined and an alert raised if the action is not comprised in the safe set of state-action pairs. For example, the action may be a goal-oriented action determined based on a reward function, the action may be determined by a parametrized policy that is being trained or that is pre-trained, such as a neural network policy, or the like. For example, it may be signalled that there is a potential error, e.g., a potential safety hazard. For example, the interaction with the physical environment may switch into a safe mode, may be paused or halted, or user feedback on how to proceed may be obtained. Accordingly, the situation where the interaction system is in danger of ending up in a dangerous situation may be dealt with suitably.

Generally, various similarity metrics, in other words pairwise state-action distance mappings, may be used to establish that state-action pairs are similar to each other, e.g., a L1, L2, or other type of Lp norm. Optionally, a similarity between a state-action pair and another state-action pair may be determined by comparing only portions of the respective states and/or actions relevant for transition probabilities. For example, merely a subset of features of a state and/or action may be taken into account, and/or states and/or actions may be categorized into categories relevant for the transition probabilities. For example, if the interacting system moves in the physical environment, the similarity may take into account local conditions, e.g., a type of surface, irrespective of the absolute location of the interacting system in the environment. This way, transition probabilities based on local conditions may be learned within the safe set, e.g., at a safe location, and the transition probabilities may be used to estimate transition probabilities outside of the safe set but with similar local conditions, e.g., close to unsafe state-action pairs. Interestingly, determining the similarity typically does not rely on whether state-action pairs are labelled as unsafe, e.g., is independent from any reward function. Accordingly, information from safe states can be used in states that are less safe or at least not known to be safe. Two state-action pairs may be defined to be similar, for example, only if their actions correspond, e.g., are equal or permuted in some way. Also for actions, subsets of features or categorizations may be used. Various examples of similarities are given herein.

Optionally, in at least one iteration, a transition probability may be estimated for a state-action pair for which no empirical transition probabilities are available, and this action may be selected to be performed. This way, it may be enabled to perform this action in a safe way even though this action was not predefined to be safe.

Optionally, a transition probability for a state-action pair may be estimated by determining similarities between the state-action pair and one or more other state-action pairs for which empirical transition probabilities are available; selecting a most relevant other state-action pair based on at least the similarities; and determining the estimated transition probability for the state-action pair based on the empirical transition probabilities of the selected other state-action pair. For example, the empirical transition probabilities of the selected other state-action pair may be assumed to carry over to the state-action pair with a certain margin of error. If the increased accuracy of the empirical transition probabilities compensates for this margin of error, then a better estimate for the state-action pair may accordingly be obtained, in particular also if no empirical transition probabilities for the state-action pair are available at all.

Optionally, the relevant other state-action pair may be selected based additionally on confidence intervals determined for the empirical transition probabilities of the other state-action pairs. For example, in various embodiments, the estimated transition probability for the present state-action pair may be determined by translating confidence intervals of other state-action pairs to confidence intervals for transition probabilities of the present state-action pair, and then selecting a state-action pair based on the translated confidence intervals. For example, a state-action pair with smallest confidence intervals, or smallest upper end of the confidence interval, may be selected. The estimated transition probabilities of that state-action pair may then be translated to the present state-action pair. This way, more reliable estimates may be obtained, decreasing the probability of inadvertently performing an unsafe action. It is noted that the selected state-action pair can also be the present state-action pair itself.

As a concrete example, a transition probability of a state-action pair may be estimated based on empirical transition probabilities of another state-action pair using a pairwise state-action distance mapping providing a similarity between state-action pairs, and an analogous state function which, given a first state-action pair, a first resulting state, and a second state-action pair, provides an analogous second resulting state. It may be assumed that the transition probabilities of arriving at the first resulting state from the first state-action pair and arriving at the second resulting state from the second state-action pair, differ by at most the similarity between the state-action pairs. Accordingly, for a pair of state-action pairs, their dynamics may be bounded by this assumption. Variations will be apparent to the skilled person, e.g., it may be assumed or proven that whenever the difference between state-action pairs is smaller than a first fixed threshold, then the difference between corresponding transition probabilities is smaller than a second fixed threshold. As this example also shows, generally, similarities and estimated transition probabilities are typically determined regardless of whether or not state-action pairs are safe, allowing information about state-action pairs from the safe set to be transferred to pairs outside of the set.

Optionally, the configuration of the interaction system may be performed in a training phase. Accordingly, the training phase may result in a safe set of state-action pairs, and possibly other information, e.g., the empirical transition probabilities. In a later use phase, additional interactions with the physical environment may take place, with actions being selected from the safe set of state-action pairs determined in the training phase. Thus, safety can be guaranteed also in the use phase, without necessarily still updating the safe set at that point. It is also possible, however, to keep updating the safe set of state-action pairs also during use, for example, the configuration of the interaction system may be based on a predefined set of safe state-action pairs and a predefined policy for selecting action of the system, the configuration comprising updating the safe set of state-action pairs as described herein, selecting actions based on the policy, and only executing the actions if they are in the safe set. When configuring the system during training, for example, the training can be ended based on various stopping criteria, e.g., a certain amount of time or number of interactions, a closeness to the goal, e.g., a sufficiently high value of a reward function in the current state-action pair or a sufficiently high average over a number of past state-action pairs, etc.

Optionally, the data indicating the current state of the physical environment may comprise sensor data of a computer-controlled device. In such cases, control data may be determined for letting the computer-controlled device effect the selected action in the physical environment, e.g., through one or more actuators. This way, the compute-controlled device may be configured to interact with a physical environment in a way that is safe, e.g., avoids being forced to take actions that are labelled as unsafe.

Computer-controlled systems include robotic systems, in which a robot can perform one or more tasks automatically, e.g., under control of an external device or an embedded controller. Further examples of systems that can be computer-controlled are vehicles and components thereof, domestic appliances, power tools, manufacturing machines, personal assistants, access control systems, drones, nanorobots, and heating control systems. In various embodiments, the computer-controlled system can be an autonomous device.

Various types of sensor data may be comprised in the state of the physical system, for example, video data, radar data, LiDAR data, ultrasonic data, motion data, etcetera. The state of the physical system is preferably represented by a discrete variable, possibly obtained by discretizing continuous sensor measurements. However, embodiments with continuous state spaces are also possible, transition probabilities being estimated and a safe set of state-action pairs kept as described herein.

For example, the computer-controlled device may move around in the physical environment, in which case the physical environment may comprise objects to be avoided by the computer-controlled device. For example, state-action pairs may be labelled as unsafe based on the state of the physical environment indicating a closeness to objects to be avoided. Interestingly, however, similarities between state-action pairs may be defined regardless of the objects to be avoided, allowing the interaction system to gain knowledge away from the objects and transfer it to the situation where the objects are nearby. For example, an autonomous vehicle may learn to brake and accelerate in a safe environment, and apply this knowledge when driving around in real traffic.

Optionally, the safe set of state-action pairs may be updated by determining a candidate set of state-action pairs that are not labelled as unsafe and for which sufficiently accurate estimated transition probabilities are available; determining a subset of the candidate set of state-action pairs for which adding the subset to the safe set of state-action pairs results in an ergodic set of state-action pairs not labelled as unsafe; and adding the determined subset to the safe set of state-action pairs. Here, a set of states-action pairs may be defined as ergodic if each first state in the set is reachable from a second state by performing actions from the set. Determining a candidate set and then pruning the candidate set to ensure ergodicity may allow the safe set to be extended with a larger number of candidates while preserving safety in the long run.

Specifically, the subset of the candidate set of state-action pairs may be determined in an iterative process, in which state-action pairs are eliminated that cannot be reached from the set of state-action pairs according to the estimated transition probabilities; state-action pairs are eliminated from which the safe set of state-action pairs cannot be reached according to the estimated transition probabilities; and state-action pairs may be eliminated to avoid reaching a state from which no action from the safe set of state-action pairs or the subset of the candidate set of state-action pairs can be taken. For example, the elimination steps may be repeated until no additional state-action pairs are eliminated. By performing elimination in this way, the inventors were able to provide a feasibly computable procedure by which the safe set of state-action pairs can be extended.

It will be appreciated by those skilled in the art that two or more of the above-mentioned embodiments, implementations, and/or optional aspects of the invention may be combined in any way deemed useful.

Modifications and variations of any system and/or any computer readable medium, which correspond to the described modifications and variations of a corresponding computer-implemented method, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which:

Fig. 1 shows a configuration system for configuring an interaction system;
Fig. 2 shows an interaction system;

Fig. 3 shows an autonomous device comprising a configuration system;

Fig. 4 shows an autonomous device in a physical environment;

Fig. 5 shows a detailed example of a model of states and actions for interacting with a physical environment;

Fig. 6 shows a detailed example of a model of states and actions in which transition probabilities are estimated;

Fig. 7 shows a computer-implemented method of configuring a system which interacts with a physical environment;

Fig. 8 shows a computer-readable medium comprising data.

It should be noted that the figures are purely diagrammatic and not drawn to scale. In the figures, elements which correspond to elements already described may have the same reference numerals.

## DETAILED DESCRIPTION OF EMBODIMENTS

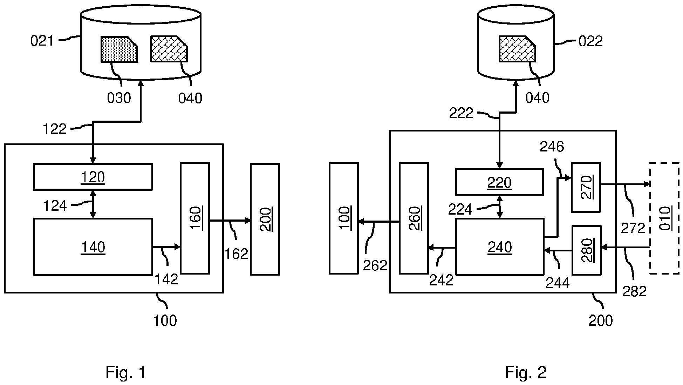

**Fig. 1** shows a configuration system 100 for configuring an interaction system 200 which interacts with a physical environment. An action of the interaction system 200 in a state of the physical environment may result in an updated state of the physical environment according to a transition probability. System 100 may comprise a data interface 120 and a processor subsystem 140 which may internally communicate via data communication 124. Data interface 120 may be for accessing data indicating a safe set of state-action pairs known to be safely performable and/or data indicating an unsafe set of state-action pairs to be avoided when interacting with the physical environment. Configuration system 100 may configure a remote interaction system 200, but interaction system 200 may also be combined with configuration system 100 as discussed throughout.

The processor subsystem 140 may be configured to, during operation of the system 100 and using the data interface 120, access data 030, 040. For example, as shown in Fig. 1, the data interface 120 may provide access 122 to an external data storage 021 which may comprise said data 030, 040. Alternatively, the data 030, 040 may be accessed from an internal data storage which is part of the system 100. Alternatively, the data 030, 040 may be received via a network from another entity. In general, the data interface 120 may take various forms, such as a network interface to a local or wide area network, e.g., the Internet, a storage interface to an internal or external data storage, etc. The data storage 021 may take any known and suitable form.

Processor subsystem 140 may be configured to, during operation of the system 100 and using the data interface 120, iteratively control an interaction of the interaction system 200 with the physical environment by performing one or more iterations. In an iteration, processor subsystem 140 may obtain data from the interaction system 200 indicating a current state of the physical environment. In the iteration, processor subsystem 140 may further update the set of state-action pairs. The updating by processor subsystem 140 may comprise estimating a transition probability for a state-action pair based on an empirical transition probability of a similar other state-action pair. The updating may further comprise including the state-action pair in the safe set of state-action pairs if the state-action pair is not labelled as unsafe and the safe set of state-action pairs can be reached with sufficient probability from the state-action pair based on the estimated transition probability.

In the iteration, processor subsystem 140 may further select an action to be performed in the current state of the physical environment from the safe set of state-action pairs, and provide the action to be performed to the interaction system 200.

The configuration system 100 may comprise a communication interface 160 configured for communication 162 with the interaction system 200. Communication interface 160 may internally communicate with processor subsystem 140 via data communication 142. Communication interface 160 may be arranged for direct communication with the other system 200, e.g., using USB, IEEE 1394, or similar interfaces. Communication interface 160 may also communicate over a computer network, for example, a wireless personal area network, an internet, an intranet, a LAN, a WLAN, etc. For instance, communication interface 160 may comprise a connector, e.g., a wireless connector, an Ethernet connector, a Wi-Fi, 4G or 4G antenna, a ZigBee chip, etc., as appropriate for the computer network. Communication interface 160 may also be an internal communication interface, e.g., a bus, an API, a storage interface, etc. For example, configuration system 100 and interaction system 200 may be combined into a single system, e.g., their processor subsystems and/or data interfaces may be combined, etcetera.

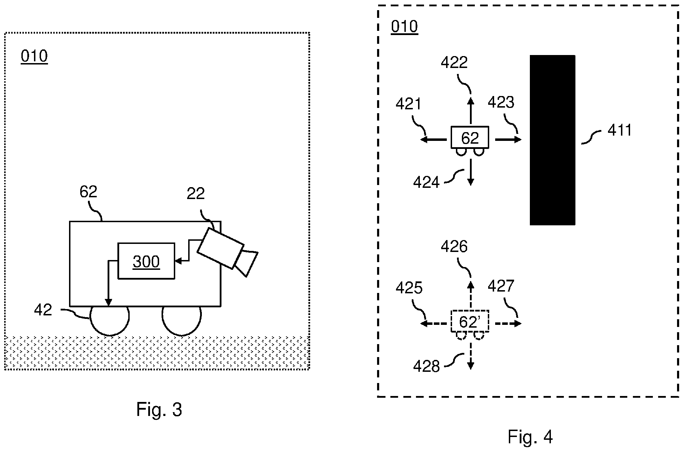

Various details and aspects of the operation of the system 100 will be further elucidated with reference to Figs. 3-6, including optional aspects thereof.

In general, the system 100 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA) and/or a Graphics Processing Unit (GPU). In general, each functional unit of the system may be implemented in the form of a circuit. It is noted that the system 100 may also be implemented in a distributed manner, e.g., involving different devices or apparatuses, such as distributed servers, e.g., in the form of cloud computing.

**Fig. 2** shows an interaction system 200 interacting with physical environment 010. System 200 may comprise a data interface 220 and a processor subsystem 240 which may internally communicate via data communication 224. The processor subsystem 240 may be configured to, during operation of the system 200 and using the data interface 220, access various data. For example, as shown in Fig. 2, the data interface 220 may provide access 222 to an external data storage 022 which may comprise said data. Alternatively, the data may be accessed from an internal data storage which is part of the system 200. Alternatively, the data may be received via a network from another entity. In general, the data interface 220 may take various forms, such as a network interface to a local or wide area network, e.g., the Internet, a storage interface to an internal or external data storage, etc. The data storage 022 may take any known and suitable form.

Processor subsystem 240 may be configured to perform an interaction with the environment 010 by iteratively obtaining, via a sensor interface 280, sensor data 282 from one or more sensors indicative of a state of the physical environment 010; providing the state of the physical system to a configuration system 100; and obtaining an action to be performed in the state of the physical environment 010 from the configuration system 100 in return; and provide via an actuator interface 270 actuator data 272 to one or more actuators causing the actuators to effect the obtained action in the physical environment 010.

The interaction system 200 may comprise a communication interface 260 configured for communication 262 with a configuration system 100. Communication interface 260 may internally communicate with processor subsystem 240 via data communication 242. Communication interface 260 may be as discussed for communication system 160 of configuration system 100. In particular, communication interface 160 may be an internal communication interface, e.g., a bus, an API, a storage interface, etc., e.g., interaction system 200 may be combined with configuration system 100 in a single system.

In an embodiment, interaction system 200 may be configured by configuration system 100 in a training phase. Interaction system 200 may obtain at least the safe set of state-action pairs 040 from interaction system 100 during the training phase. For example, as illustrated in the figure, interaction system 200 may access safe set 040 via data interface 220, e.g., processor subsystem 240 may obtain safe set 040 from the interaction system via the data interface 220 or store an otherwise obtained safe set 040 using the data interface 220. In a use phase following this training phase, interaction system 200 may interact with the environment 010, e.g., according to a policy, wherein interaction system 200 may iteratively: obtain a current state of the physical environment; select an action to be performed in this current state from safe set 040; and provide actuator data based on the selected action to the one or more actuators as described herein.

The system 200 may comprise a sensor interface 280 for obtaining, from one or more sensors (not shown), sensor data 282 indicative of a state of the physical environment 010. Sensor interface 280 may internally communicate with processor subsystem 240 via data communication 244. In the following, for explanatory purposes, a single sensor is discussed. The sensor data 282 may comprise one or more physical quantities of the environment and/or interaction system 200. In some embodiments, the sensor may be arranged in physical environment 010. In other examples, the sensor may be arranged remotely from the environment, for example if the quantities can be measured remotely. For example, a camera-based sensor may be arranged outside of environment 010 but may nevertheless measure quantities associated with the environment, such as a position and/or orientation of the physical entity in the environment. Sensor interface 280 may also access the sensor data from elsewhere, e.g., from a data storage or a network location. Sensor interface 280 may have any suitable form, including but not limited to a low-level communication interface, e.g., based on I2C or SPI data communication, but also a data storage interface such as a memory interface or a persistent storage interface, or a personal, local or wide area network interface such as a Bluetooth, Zigbee or Wi-Fi interface or an ethernet or fibreoptic interface. The sensor may be part of system 200.

The system 200 may comprise an actuator interface 270 for providing, to one or more actuators (not shown), actuator data 272 causing the one or more actuators to effect an action in the environment 010. Actuator interface 270 may internally communicate with processor subsystem 240 via data communication 246. For ease of explanation, below, a single actuator is discussed. For example, the actuator may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc. The actuator may be part of system 200.

Various details and aspects of the operation of the system 200 will be further elucidated with reference to Figs. 3-6, including optional aspects thereof.

In general, the system 200 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA) and/or a Graphics Processing Unit (GPU). In general, each functional unit of the system may be implemented in the form of a circuit. It is noted that the system 200 may also be implemented in a distributed manner, e.g., involving different devices or apparatuses, such as distributed servers, e.g., in the form of cloud computing.

**Fig. 3** shows an example of the above, in that a control system 300 for controlling an autonomous device 62 is shown that comprises a configuration system and/or an interaction system, e.g., system 100 of Fig. 1 and/or system 200 of Fig. 2. The autonomous device 62 may be trained to move around in a physical environment 010, for example, a warehouse in which the autonomous device 62 operates. For example, as shown in the figure, control system 300 may control powering and/or steering of wheels 42 of the autonomous device 62. The state of the physical environment may be based at least in part on images obtained from a camera 22.

For example, autonomous device 62 may be trained to perform a particular task, for example, to move around a warehouse to pick up a certain object. For example, autonomous device 62 may be trained to interact according to a reward function configured for the task to be performed. As further illustrated in **Fig. 4,** however, it may be desired for autonomous device 62 to avoid certain unsafe state-action pairs. For example, the physical environment 010 may comprise certain objects to be avoided, e.g., object 411 shown in Fig. 4. For example, state-action pairs may be labelled as unsafe based on the objects to be avoided, e.g., actions leading to the autonomous device 62 getting in contact with the objects to be avoided may be labelled as unsafe.

As also shown in Fig. 4, the autonomous device 62 may perform certain actions, e.g., to move in certain directions. Shown in the figure are four actions to move in respective directions: to the left 421, to the top 422, to the right 423, or to the bottom 424. In this example, autonomous device 62 is relatively close to object 411. Moving to the right may not directly result in device 62 bumping into the object, but if device 62 would move to the right, it may be the case that a collision cannot be avoided anymore, e.g., device 62 may have too much speed to avoid a collision. At least, based on empirical transition probabilities established at some point, it may be insufficiently certain that unsafe state-actions can be avoided if action 423 were taken.

Interestingly, in order to determine whether action 423 is safe in the long run for the autonomous device 62 at the present location, transition probabilities for taking action 423 may be estimated based on empirical transition probabilities of a similar other state-action pair, e.g., taking action 427 by the autonomous device in the position 62'. For example, position 62' may be similar to position 62, e.g., in terms of surface material on which the device 62 moves, incline of the surface, etcetera. For example, it may be known that taking action 427 from position 62' is safe, e.g., this state-action pair may be included in an initial safe set of state-action pairs, for example because there are no objects to be avoided within a certain range of that state. Moreover, it may be assumed that taking action 427 in state 62' has an analogous effect as taking action 423 in state 62, and similarly for states 421 and 425; states 422 and 426; and states 424 and 428. At least, a probability of ending up at a certain distance to the right of position 62 by taking action 423 may be assumed to be similar to a probability of ending up at a certain distance to the right of position 62' by taking action 427, and similarly for the other actions.

Accordingly, transition probabilities for a state-action pair 423 may be estimated based on empirical transition probabilities for a similar state-action pair 427. Although the state-action pairs may be similar, whether or not the resulting state-action pairs are unsafe may differ, e.g., state-action pairs close to state 62' may all be safe. Accordingly, transition probabilities of a state-action pair 423 that is potentially unsafe in the long run may be estimated based on transition probabilities of a state-action pair 427 that is comprised in a safe set of state-action pairs known to be safe in the long run. Moreover, if the state-action pair 423 is itself not labelled as unsafe and the safe set of state-action pairs can be reached with sufficient probability from the state-action pair 423 based on the estimated transition probability, state-action pair 423 may be included in the safe set of state-action pairs.

Accordingly, it may be made possible to perform action 423, e.g., if it is established from experience in state 62' that the device can brake sufficiently fast without bumping into object 411. Accordingly, the techniques described herein may allow device 62 to perform additional actions that were not initially known to be safe, and accordingly, device 62 may be better enabled to perform its tasks, e.g., getting to the other side of object 411 or stopping close to object 411 for a warehouse item from storage 411 to be loaded onto a transport vehicle 62. In various embodiments, moreover, if an action 423 is not known to be safe but would be desirable to execute, actions may be selected for improving the estimated transition probabilities for the desirable action 423, e.g., by selecting an action to be performed based on which the transition probabilities may be improved, or even moving towards a state from which such an action can be performed. For example, device 62 may move to position 62' in order to perform action 427 to refine estimated transition probabilities of action 423. Accordingly, the device may learn more efficiently to interact with the environment 010, e.g., the device may learn to perform a task with higher sample efficiency.

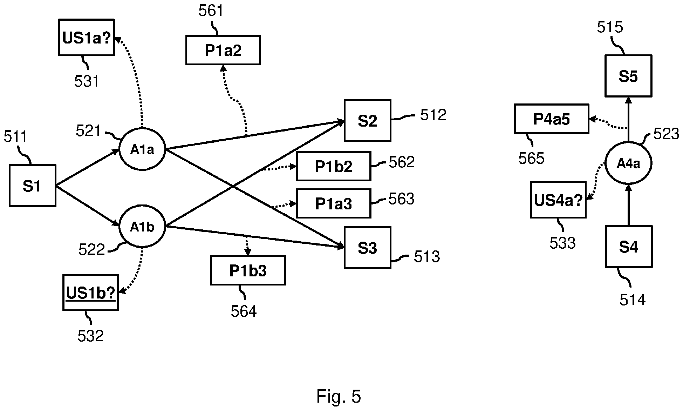

**Fig. 5** shows a detailed, yet non-limiting, example of a model of states of a physical environment and actions of an interaction system interacting with the physical environment.

Shown in the figure are states **S1,** 511; **S2,** 512; **S3,** 513; **S4,** 514; **and S5,** 515. As illustrated in detail for state **S1,** an action of the system in a state of the physical environment may result in an updated state of the physical environment according to a transition probability. For example, in state **S1,** the interaction system may perform actions **a** and **b.** This is represented by two state-action pairs **A1a** 521, and **A1b,** 522, representing the interaction system performing actions **a** and **b** from state **S1,** respectively. Similarly, from state **S4,** the system may perform the same action **a,** represented by state-action pair **A4a,** 523. There may be additional states, actions, and/or state-action pairs that are not shown in this figure for ease of exposition. For example, the number of states may be at most or at least 10, at most or at least 100, or at most or at least 1000. In this example, a discrete state space with a finite number of states is illustrated. For example, such a state space may be obtained by discretizing a continuous state-space. There are typically multiple actions, e.g., at most or at least 10, at most or at least 100, or at most or at least 1000. Typically, an interaction system interacting with a physical environment knows the current state of the environment, and knows which actions it performs, but an action can result in several states.

For example, as shown in the figure, taking action **a** from state **S1,** may result in state **S2** with a probability **P1a2,** 561, and may result in state **S3** with probability **P1a3,** 563. Similarly, taking action **b** from state **S1** may result in state **S2** with probability **P1b2,** 562; and in state **S3** with probability **P1b3,** 564. Taking action **a** in state **S4** may result in state **S5** with probability **P4a5,** 565. Interestingly, the model illustrated in Fig. 5 may be a stochastic model in which the respective probabilities **P\*\*\*** do not need to be zero or one, e.g., at least one of the probabilities is neither zero nor one. Taking an action in a state may also result with a nonozero probability in the state itself as an updated state, e.g., one of the actions that can be selected may be to do nothing. In some cases, each action may be performed in each state, although it is also possible that some actions are only available to be performed in a subset of the states. Interestingly, an interaction system interacting with a physical environment may not have a priori knowledge of the transition probabilities, e.g., may need to empirically determine them or estimate them based on experience of interacting with the environment.

As also shown in the figure, a subset of state-action pairs may be indicated as being an unsafe set of state-action pairs to be avoided when interacting with the physical environment. For example, shown in the figure are label **US1a?,** 531, for state-action pair **A1;** label **US1b?,** 532, for state-action pair **A1b**, and label **US4a?,** 533, for state-action pair **A4a.** For example, state-action pair **A1b** may be labelled as unsafe and state-action pairs **A1a** and **A4a** may not be labelled as unsafe, as indicated by the underlining in the figure. The label may denote instantaneous safety, e.g., if a state-action pair is not labelled as unsafe it may still be unsafe in the long run, e.g., by taking the action it may be possible to arrive in another state from which only unsafe actions can be performed.

For example, the states and actions shown in the figure may form a Markov Decision Process (MDP). Mathematically, an MDP may be represented as a 5-tuple $\langle$ *S, A, R, T,* $\gamma\rangle$ with sets of states *S* and actions *A,* a known, deterministic reward function $R: S \times A \mapsto \mathbb{R}$, an unknown, stochastic dynamics function $T: S \times A \mapsto \mathbb{R}^S$ which maps a state-action pair to a probability distribution over next states, and a discount factor $\gamma$. In various embodiments, *S* and/or *A* is finite. An interaction system may interact with the physical environment according to the reward function, e.g., by maximizing an expected accumulated reward as is known from reinforcement learning, etc. The reward function may also provide the labelling of state-action pairs as unsafe, e.g., a state-action pair may be labelled as unsafe if its reward is negative. In various embodiments, rewards are assumed to be bounded between -1 and 1. The discount factor $\gamma$ may be a value between 0 and 1.

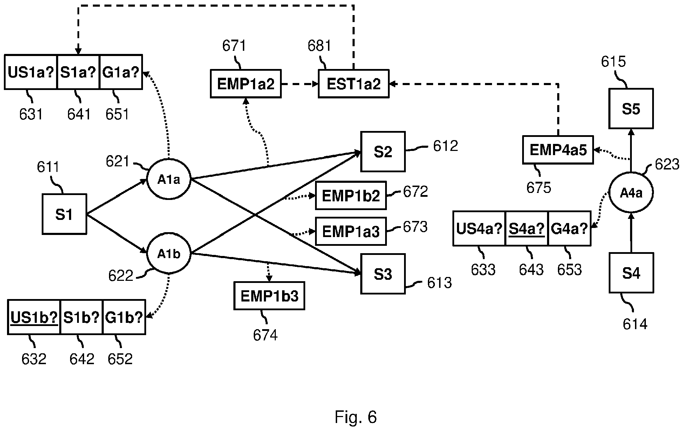

**Fig. 6** shows a detailed example of a model of states and actions in which transition probabilities are estimated. For example, Fig. 6 may represent knowledge that an interaction system has about the model shown in Fig. 5.

As in Fig. 5, states **S1,** 611; **S2,** 612; **S3,** 613; **S4,** 614; and **S5,** 615 are shown. State-action pairs **A1a,** 621 and **A1b,** 622, may represent state-action pairs of performing actions **a,** and **b,** respectively, in from state **S1.** Similarly, state-action pair **A4a,** 623, may represent taking action **a** from state **S4.** Also illustrated in the figure is a labelling of state-action pairs as unsafe action pairs to be avoided when interacting with the physical environment. As an example, the shown labels **US1a?,** 631 and **US4a?,** 633 may not label state-action pairs **A1a** and **A4a** as unsafe whereas label **US1b?,** 632 may label state-action pair **A1b** as unsafe. As in Fig. 5, the states and actions may form a Markov Decision Process, e.g., with the labelling of unsafe state being provided by the reward function.

While interacting with the physical environment, a safe set of state-action pairs may be maintained. This is illustrated in the figure by labels **S1a?,** 641; **S1b?,** 642; and **S4a?,** 643; illustrating whether respective state-action pairs **A1a, A1b,** and **A4a** are comprised in the safe set. In various embodiments, it may be guaranteed that the set is safe in the sense that it does not comprise state-action pairs labelled as unsafe and that it is closed, e.g., starting from a state in the set and taking actions from the set, it may be guaranteed, at least with high probabilities, that the resulting state is also comprised in the set. Here and elsewhere, a state may be considered to be comprised in a set of state-action pairs if the set of state-action pairs includes an action from that state.

For example, in the case of MDPs, the following mathematical definitions and notation may be adopted:

- $Z \in S \times A$ may be defined as **closed** if for every $(s, a) \in Z$ and for every next s' for which $T(s,a,s') > 0$, there exists a' such that $(s',a') \in Z$.
- $Z \subset S \times A$ may be defined as a **safe set** if Z is closed and for all $(s,a) \in Z$, $R(s,a) \geq 0$. $(s,a) \in Z$ may be referred to as safe state-action pairs. For example, the safe set that is updated when interacting with a physical environment according to various embodiments, may be updated while satisfying this notion of safety.
- For any $Z \subset S \times A$, it may be said that $s \in Z$ if there exists any $a \in A$ such that $(s,a) \in Z$.
- A state-action pair $(s,a)$ may be defined as an edge of Z if $(s,a) \notin Z$ but $s \in Z$.
- $P[\cdot|\pi]$ may be used to denote the probability of an event occurring while following the policy $\pi$.
- For a policy $\pi$, $\pi \in \Pi(Z)$ may be used to denote that, for all $s \in Z$, $(s,\pi(s)) \in Z$.
- A subset of state-action pairs, $Z \subset S \times A$ may be defined as **ergodic** if Z is closed and for any $s \in Z$, there exists a policy $\pi_s \in \Pi(Z)$ such that $\forall s'$, $P[\exists t, s_t = s' |\pi_{s'}, s_0 = s] = 1$. For example, each state in Z may be reachable from each other state through a policy that never exits the subset Z. It may be observed that, when Z is the set of all state-action pairs in the MDP, this definition corresponds to definitions of ergodicity known in the art.

In various embodiments, an initial safe set $Z_0$ may be obtained, e.g. an initial safe set satisfying the notion of safety for an MDP described mathematically as above. The initial state $s_{init}$ from which the controlling of an interaction with the physical environment starts, may be comprised in this initial safe set. Preferably, the initial safe set may be ergodic so that the interaction system can perform actions inside the safe set without the risk of getting stuck.

In various embodiments, while interacting with the physical environment, empirical transition probabilities of state-action pairs resulting in an updated state may be maintained. As an illustration, shown in the figure are empirical transition probability **EMP1a2,** 671, of taking action **a** in state **S1** leading to state **S2**; empirical transition probability **EMP1b2,** 672, of taking action **b** in state **S1** leading to state **S2**; empirical transition probability **EMP1a3,** 673, of taking action **a** in state **S1** leading to state **S3**; empirical transition probability **EMP1b3,** 674, of taking action **b** in state **S1** leading to state **S3**; and an empirical transition probability **EMP4a5,** 675, of taking action **a** in state **S4** leading to state **S5**. For example, quantities $n(s_t,a_t)$ representing a number of times a state-action pair was performed and $n(s_t,a_t,s_{t+1})$ representing a number of times this led to update state $s_{t+1}$ may be maintained. An empirical transition probability may be determined as $n(s_t,a_t,s_{t+1})/n(s_t,a_t)$. If $n(s_t,a_t)$, e.g., no empirical evidence of taking action $a_t$ from state $s_t$, an estimated transition probability indicating maximal uncertainty may be returned, e.g., a confidence interval [0,1].

If In some embodiments, empirical transition probabilities of a state-action pair may be updated, and quantities depending on it recomputed, only if the number of times that the state-action pair is encountered does not exceed a threshold m. The inventors envisaged this measure to help reach the mathematical guarantee of PAC-MDP optimality but in many practical settings it is not needed. Preferably, threshold $m$ is chosen bigger than $1/\tau$, where $\tau$ is a threshold parameter further discussed below.

Interestingly, in various embodiments, the safe set of state-action pairs may be updated while interacting with a physical environment, e.g., by including additional state-action pairs for which it is safe to do so, as discussed further below. However, in order to determine that it is safe to include a state-action pair, transition probabilities may be needed for state-action pairs that are not in the safe set, e.g., for which it is not known to be safe to perform the action. Interestingly, in such cases, performing such potentially unsafe actions may be avoided by instead estimating transition probabilities **EST\*\*\*** for state-action pairs based on empirical transition probabilities **EMP\*\*\*** of other state-action pairs. In particular, in at least one iteration, a transition probability may be estimated for a state-action pair for which no empirical transition probabilities are available, e.g., leading to that action being selected to be performed.

For example, as shown in the figure, an estimated transition probability **EST1a2,** 681, of state-action pair **A1a** leading to state **S2** may be determined based on, e.g., equal to, an empirical transition probability **EMP4a5** of another action **A4a** leading to a state **S5,** if it is determined that state-action pair **A4a** is sufficiently similar to state-action pair **A1a** and **S5** relates to **S4** similarly to how **S2** relates to **S1.** This is illustrated by the dashed arrow from **EMP4a5** to **EST1a2.** It is also possible to determine an estimated transition probability based on, e.g., equal to, an empirical transition probability of the state-action pair itself, as illustrated by the dashed arrow from **EMP1a2** to **EST1a2;** and/or based on multiple empirical transition probabilities, e.g., as an average.

A detailed example is now given in which a transition probability, e.g., **EST1a2,** for a state-action pair leading to a certain other state, e.g., **A1a** leading to **S2,** is determined by determining similarities between the state-action pair, e.g., **A1a,** and one or more other state-action pairs, e.g., **A4a,** for which empirical transition probabilities, e.g., **EMP4a5,** are available. A most relevant other state-action pair, e.g., **A4a,** may be selected based on at least the similarities. The estimated transition probability, e.g., **EST1a2** for the state-action pair may then be determined based on, e.g., equal to the empirical transition probabilities, e.g., **EMP4a5,** of the selected other state-action pair.

In estimating transition probabilities, various embodiments use a predefined analogous state function $\alpha$: $(S \times A \times S) \times (S \times A) \to S$ and a predefined pairwise state-action distance mapping $\Delta$: $(S \times A) \times (S \times A) \to [0,1]$. It may be assumed that, for most or all state-action pairs $(s,a,\tilde{s},\tilde{a}) \in (S \times A) \times (S \times A)$,

$$\sum_{s' \in S} |T(s, a, s') - T(\tilde{s}, \tilde{a}, \alpha(s, a, s', \tilde{s}, \tilde{a}))| \leq \Delta((s, a), (\tilde{s}, \tilde{a})).$$

For example, for two state-action pairs, a bound on the distance, e.g., $L_1$ distance, between their dynamics may be assumed, based on a mapping between analogous next states. For example, $\alpha$ may represent an identity mapping between respective next states, e.g., $\alpha(s, a, s', \tilde{s}, \tilde{a})$ = s'). Other functions may also be used, allowing a wider set of analogies to be represented. Conceptually, $\alpha$ may indicate a closeness of reactions of the physical environment in response to respective state-action pairs, allowing to transfer knowledge from previously seen state-action pairs to previously unseen or less seen state-action pairs. For example, the smaller $\Delta$ is, e.g., the more similar the state-action pairs, the more knowledge transfer may take place.

Accordingly, for respective transition probabilities, estimated transition probabilities $\overset{\Delta}{T}: S \times A \times S \rightarrow [0,1]$, e.g., **EST1a2,** may be maintained. Optionally, also confidence interval widths for the estimated transition probabilities (not shown) may be maintained, e.g., per state-action pair $\overset{\Delta}{\epsilon}: S \times A \rightarrow \mathbb{R}$. Also the confidence intervals may be used to select a most relevant other state-action pair.

As a detailed example, let $\hat{T}$ denote the empirical transition probabilities **EMP\*\*\*.** Let $\hat{\epsilon}_T(s,a)$ denote a L1 confidence interval for an empirical transition probability $\hat{T}(s, a)$. As known from "An analysis of model-based Interval Estimation for Markov Decision Processes", if

$$\hat{\epsilon}_T(s, a) = \sqrt{\frac{2[\ln(2^{|S|} - 2) - \ln(\delta_T)]}{n(s,a)}}$$

where $n(s,a)$ is the number of times state-action $(s,a)$ is encountered, the L1 confidence intervals may hold with probability $\delta_T$. Beneficially, using analogies, tighter confidence intervals $\overset{\Delta}{\epsilon}_T$, centred around an estimated $\overset{\Delta}{T}$, may be determined, especially for unexperienced state-action pairs, by transferring a confidence interval from a sufficiently similar state-action pair with a relative small confidence interval to another state-action pair with a larger confidence interval.

As an example, the following algorithm may be used to determine estimated transition probabilities, e.g., **EST1a2,** from empirical transition probabilities, e.g., **EMP4a5:**

---

**Algorithm.** Compute Analogy-based Confidence Intervals

---

compute $\hat{\epsilon}_T(s, a)$ using $\delta_T$

**for** $(s, a) \in S \times A$ **do**

$\quad (\tilde{s}, \tilde{a}) \leftarrow \mathrm{argmin}\{\hat{\epsilon}_T(s, a), \min_{\tilde{s}, \tilde{a}} \epsilon_T(\tilde{s}, \tilde{a}) + \Delta((s, a), (\tilde{s}, \tilde{a}))\}$

$\quad \overset{\Delta}{\epsilon}_T(s, a) := \hat{\epsilon}_T(\tilde{s}, \tilde{a})$

$\quad$ **for** $s' \in S$ **do**

$\quad\quad \tilde{s}' \leftarrow \alpha((s, a, s'), (\tilde{s}, \tilde{a}))$

$\quad\quad \overset{\Delta}{T}(s, a, s') := \hat{T}(\tilde{s}, \tilde{a}, \tilde{s}')$

---

Interestingly, based on estimated transition probabilities, e.g., **EST1a2,** a state-action pair, e.g., **A1a** may be included in the safe set of state-action pairs. Specifically, a state-action pair may be included, e.g., its label **S1a?** adjusted, only if or whenever, the state-action pair is not labelled as unsafe, e.g., by labelling **US1a?,** and the safe set of state-action pairs can be reached with sufficient probability from the state-action pair based on the estimated transition probability, e.g., **EST1a2.**

Specifically, if estimated transition probabilities **EST\*\*\*** for a state-action pair are sufficiently reliable, e.g., if a confidence interval is sufficiently small, then it may be established with sufficient confidence which other states may be reached as a result of a given action. In other words, the support of the next-state distribution of the state-action pair may be recovered with sufficient confidence. Specifically, the inventors realised that if it is assumed that all non-negative transition probabilities occur with a probability at least $\tau$, then it may be sufficient for a confidence interval to satisfy

$$\overset{\Delta}{\epsilon}(s,a) \leq \tau/2.$$ Here, $\tau$ is an irrelevance threshold on unlikely transformations, e.g., all transition probabilities may be assumed to be at least $\tau$. Based on determining which other states a state-action pair may result in, the state-action pair may be determined to be safe, e.g., if each resulting state-action pair was already in the safe set or based on other techniques for updating the safe set discussed below. Preferably, threshold parameter $\tau$ is to a small value, e.g., smaller than $1/(|S| \cdot tmax)$ where $|S|$ is the cardinality of the state set $S$ and $tmax$ is the maximum number of environment interactions to be performed by the interaction system.

In various embodiments, instead of adding state-action pairs to the safe set one-by-one, the safe set of state-action pairs may be updated based on a candidate set of state-action pairs that are not labelled as unsafe and for which sufficiently accurate estimated transition probabilities are available, e.g., for which the support is known. In order to add candidate state-action pairs to $\hat{Z}_{safe}$ while ensuring that $\hat{Z}_{safe}$ is closed, a safe return policy to $\hat{Z}_{safe}$ may be needed, in the sense that for every state-action pair in the return path, the support of the next state distribution is known, and all possible resulting states allow to return to $\hat{Z}_{safe}$ with sufficiently high probability. Accordingly, a subset of the candidate set of state-action pairs may be determined for which adding the subset to the safe set of state-action pairs results in an ergodic set of state-action pairs not labelled as unsafe.

Specifically, the candidate set may be pruned in an iterative approach. In this iterative approach, state-action pairs may be eliminated that cannot be reached from the safe set of state-action pairs according to the estimated transition probabilities, or from which the safe set of state-action pairs cannot be reached according to the estimated transition probabilities. Accordingly, ergodicity may be achieved. Then, state-action pairs may be eliminated to ensure closeness, in other words to avoid reaching a state from which no action from the safe set of state-action pairs or the subset of the candidate set of state-action pairs can be taken. These iterations may be repeated, e.g., until convergence.

Interestingly, as the inventors were able to show, such an iterative approach may lead to a safe and ergodic set. Moreover, the inventors were also able to show that the approach is complete, in the sense that for each state on the edge of $\hat{Z}_{safe}$ for which there exists a return policy to $\hat{Z}_{safe}$ which passes only through non-unsafe state-action pairs with sufficiently accurate estimated transition probabilities, this edge action and all of the actions in every possible return trajectory to $\hat{Z}_{safe}$ may be added. Accordingly, this pruning approach may allow a relatively large amount of state-action pairs to be included in the safe set.

As a detailed example, the following algorithm may be used to updated the safe set based on a candidate set of state-action pairs:

---

**Algorithm.** Compute Safe Set

---

$Z_{\text{candidate}} \leftarrow \{(s,a) \in (S \times A) \backslash \hat{Z}_{\text{safe}} \, s.t. \, \overset{\Delta}{\epsilon}_T(s,a) < \tau/2, R(s,a) \geq 0\}$

**while** $Z_{\text{candidate}} \neq Z_{\text{closed}}$ in the last iteration **do**

     $Z_{\text{reachable}} \leftarrow \{(s,a) \in Z_{\text{candidate}} : s \in \hat{Z}_{\text{safe}}\}$

     **while** $Z_{\text{reachable}}$ changed in the last iteration **do**

         **for** $(s,a) \in Z_{\text{reachable}} \cup \hat{Z}_{\text{safe}}$ **do**

             add $\{(s',a') \in Z_{\text{candidate}} \, s.t. \, \overset{\Delta}{T}(s,a,s') > 0\}$ to $Z_{\text{reachable}}$

     $Z_{\text{returnable}} \leftarrow \emptyset$

     **while** $Z_{\text{returnable}}$ changed in the last iteration **do**

         **for** $(s,a) \in Z_{\text{reachable}}$ **do**

             **if** $\exists(s',a') \in Z_{\text{returnable}} \cup \hat{Z}_{\text{safe}} \, s.t. \, \overset{\Delta}{T}(s,a,s') > 0$ **then**

                 add $(s,a)$ to $Z_{\text{returnable}}$

     $Z_{\text{closed}} \leftarrow Z_{\text{returnable}}.$

     **while** $Z_{\text{closed}}$ changed in the last iteration **do**

         **for** $(s,a) \in Z_{\text{closed}}$ **do**

             **if** $\exists s' \in S \, s.t. \, \overset{\Delta}{T}(s,a,s') > 0$ and $\forall a' \in A, \, (s',a') \notin Z_{\text{closed}} \cup \hat{Z}_{\text{safe}}$ **then**

                 remove $(s,a)$ from $Z_{\text{closed}}$

     $Z_{\text{candidate}} \leftarrow Z_{\text{closed}}$

$\hat{Z}_{\text{safe}} \leftarrow Z_{\text{closed}} \cup \hat{Z}_{\text{safe}}$

---

Accordingly, by selecting an action to be performed in a current state of the physical environment from the safe set of state-action pairs, and providing the action to be performed to the interaction system interacting with the physical environment, safety of the interaction with the physical environment may be improved, while still enabling the system to perform actions that were not initially labelled as unsafe. For example, in a random exploration setting, the interaction system may be able to randomly explore the environment in a safe way. Or, in a setting with a parametric policy, for example defined by an artificial neural network, an action may be determined according the parametric policy and performed only if the action from the current state is comprised in the safe set. Generally, an alert may be raised if a determined action is not comprised in the safe set.

In various embodiments, however, the interaction with the physical environment may take place according to a reward function. For example, a goal-oriented action to be performed in the current state of the physical environment may be determined based on the reward function, for example, to maximize an expected accumulated reward as known per se. That action may then be performed only if it is comprised in the safe set of state-action pairs. In particular, a set of goal state-action pairs may be determined that are reachable by performing goal-oriented actions. For example, shown in the figure are labels **G1a?,** 651; **G1ba?,** 652; and **G4a?,** 653, indicating whether respective state-action pairs **A1a, A1b,** and **A4b** are comprised in the set of goal-oriented actions. In such a case, the determined goal-oriented action may be performed only if each of these goal state-action pairs is comprised in the safe set. As discussed elsewhere, this may reduce the likelihood of getting stuck in certain situations.

Interestingly, in various embodiments, if a goal-oriented action according to the reward function cannot be performed, e.g., if the goal-oriented action is not comprised in the safe set or if a determined set of goal state-action pairs is not comprised fully in the safe set, then the reward function may nonetheless be used as a guide to determine an action to be performed in several ways. For example, in at least an iteration, a similar state-action pair may be determined that is similar to a goal-oriented state-action pair not comprised in the safe set, and transition probabilities for the goal-oriented state-action pair may be estimated based on empirical transition probabilities of the similar state-action pair, thereby possibly allowing the goal-oriented to be added to the safe set. Or, in at least an iteration, a return state-action pair may be selected for returning to the goal set of state-action pairs.

Several of the above possibilities are explained based on the following detailed pseudocode example of configuring an interaction system:

---

**Algorithm.** Analogous Safe-state Exploration

---

**Using.** Parameters $m, \delta_T, \gamma_{\text{explore}}, \gamma_{\text{switch}}$

$\hat{Z}_{\text{safe}} \leftarrow Z_0$                                                                 // initial safe set of state-action pairs

$\hat{Z}_{\text{unsafe}} \leftarrow \{(s, a) \in S \times A : R(s, a) < 0\}$                  // subset of state-action pairs labelled unsafe

$n(s, a), n(s, a, s') \leftarrow 0$ for all $(s, a, s') \in S \times A \times S$          // empirical transition probabilities

$\overline{Z}_{\text{goal}} \leftarrow S \times A$

$s_0 \leftarrow s_{\text{init}}$

Compute $\overline{\pi}_{\text{goal}}, \overline{Z}_{\text{goal}}, Z_{\text{explore}}$                                 // e.g. using algorithm discussed below

Compute $\overline{\pi}_{\text{explore}}, \overline{\pi}_{\text{switch}}$

**for** $t = 1, 2, 3, \ldots$

    let $s_t$ be the current state of the physical environment

    **if** $\overline{Z}_{\text{goal}} \not\subseteq \hat{Z}_{\text{safe}}$                     // not all goal-oriented actions comprised in safe set

        choose action $a_t := \overline{\pi}_{\text{explore}}(s_t)$                     // select similar state-action pair

    **else**

        **if** $s_t \not\subseteq \overline{Z}_{\text{goal}}$

            choose action $a_t := \overline{\pi}_{\text{switch}}(s_t)$                     // select return state-action pair

        **else**

            choose action $a_t := \overline{\pi}_{\text{goal}}(s_t)$                     // select goal-oriented action

    let $s_{t+1}$ be the new state reached

    **if** $n(s_t, a_t) < m$ **then**

        $n(s_t, a_t) \leftarrow n(s_t, a_t) + 1$

        $n(s_t, a_t, s_{t+1}) \leftarrow n(s_t, a_t, s_{t+1}) + 1$     // update empirical transition probabilities

        compute confidence intervals with parameter $\delta_T$

        compute $\hat{Z}_{\text{safe}}$     // update safe set based on estimated transition probabilities

        compute $\overline{\pi}_{\text{goal}}, \overline{Z}_{\text{goal}}, Z_{\text{explore}}$                     // e.g. using algorithm discussed below

        compute $\overline{\pi}_{\text{explore}}, \overline{\pi}_{\text{switch}}$

---

The above example demonstrates three ways of selecting safe actions based on a reward function, defined by three different policies. The first policy is a goal-oriented policy $\pi_{\text{goal}}$. In this example, the goal-oriented policy is performed only if each goal state-action pair $Z_{\text{goal}}$ is comprised in the safe set of state-action pairs $\hat{Z}_{\text{safe}}$. The second policy is an

exploration policy $\pi_{\text{explore}}$ that preferably selects similar state-action pairs based on the reward function for allowing the safe set of state-action pairs to be extended, as also discussed elsewhere. The $\pi_{\text{explore}}$ policy can also expand the safe set arbitrarily, for example. The third policy is a switching policy $\pi_{\text{switch}}$ that can be thought of as a policy that enables switching from $\pi_{\text{explore}}$ to $\pi_{\text{goal}}$.

The above algorithm also demonstrates several subsets of the set of state-action pairs that may be maintained throughout the environment interaction. The first set is the safe set of state-action pairs $\hat{Z}_{\text{safe}}$ which is initialized to an initial safe set $Z_0$ and may be gradually expanded over time. Another set is the set of goal-oriented actions $Z_{\text{goal}}$, e.g., the set of state-action pairs that may be visited by following a goal-based policy regardless of the safe set. Another set is $\hat{Z}_{\text{unsafe}}$. This set may be initialized to the set of state-action pairs labelled as unsafe, but can optionally also be extended with additional state-action pairs, e.g., as described herein. In the above example, the policies and sets are recomputed whenever a state-action pair is visited that has been explored fewer than m times with m a given hyperparameter. This way, the policies and sets may be recomputed when it may be expected that useful information will be added, while saving computational resources by not performing the re-computation if it is likely to be of little use.

Below, an example algorithm is given by which the set of goal-oriented actions $Z_{\text{goal}}$, and a set of similar state-action pairs $Z_{\text{explore}}$ for estimating transition probabilities, can be determined.

---

**Algorithm.** Compute $\overline{\pi}_{\text{goal}}$, $\overline{Z}_{\text{goal}}$ and $Z_{\text{explore}}$

---

$Z_{\text{explore}} \leftarrow \emptyset$

**for** $i = 1, 2, \ldots$ **do**

    compute $\overline{\pi}_{\text{goal}}$

    compute $\overline{Z}_{\text{goal}}$

    **if** $\overline{Z}_{\text{goal}} \subset \hat{Z}_{\text{safe}}$ **then**

        **break**

    $Z_{\text{edge}} \leftarrow \{(s,a) \in \overline{Z}_{\text{goal}} \backslash \hat{Z}_{\text{safe}} \mid s \in \hat{Z}_{\text{safe}}\}$

    // compute $Z_{\text{explore}}$

    $Z_{\text{explore}} \leftarrow \emptyset$

    $Z_{\text{return}} \leftarrow \emptyset$

    $L \leftarrow 0$

    $Z_{\text{next}}^0 \leftarrow Z_{\text{edge}}$

**while** $Z_{\text{explore}} = \emptyset$ and $Z_{\text{next}}^{L} \neq \emptyset$ **do**

$\qquad Z_{\text{next}}^{L+1} \leftarrow \emptyset$

$\qquad$ **for** $(s,a) \in Z_{\text{next}}^{L}$ **do**

$\qquad\qquad$ **if** $\overset{\Delta}{\epsilon}_T(s,a) > \tau/2$ **then**

$\qquad\qquad\qquad$ add $\{ \tilde{s}, \tilde{a} \in \hat{Z}_{\text{safe}} \;\; s.t. \Delta((s,a),(\tilde{s},\tilde{a})) < \tau/4 \}$ to $Z_{\text{explore}}$

$\qquad\qquad$ **else**

$\qquad\qquad\qquad$ add $\{s', a' \in S \times A \colon \overset{\Delta}{T}(s,a,s') > 0\} \backslash (Z_{\text{return}} \cup \hat{Z}_{\text{safe}} \cup \hat{Z}_{\text{unsafe}})$ to $Z_{\text{next}}^{L+1}$

$\qquad L \leftarrow L + 1$

$\qquad$ **if** $Z_{\text{explore}} = \emptyset$ **then**

$\qquad\qquad$ add $Z_{\text{edge}}$ to $\hat{Z}_{\text{unsafe}}$

$\qquad$ **else**

$\qquad\qquad$ **break**

---

In order to include a state-action pair in the safe set $\hat{Z}_{\text{safe}}$ it is noted that accurate transition probabilities may be needed not just for the state-action pair itself but also for state-action pairs on return trajectories to $\hat{Z}_{\text{safe}}$. Namely, such transition probabilities may allow to determine that the safe set of state-action pairs can be reached with sufficient probability from the state-action pair to be added. Accordingly, in various embodiments, a similar state-action pair to be performed is determined that is similar to a goal-oriented state-action pair, or to a state-action pair on the return path from the goal-oriented state-action pair to the safe set, allowing transition probabilities for these latter state-action pairs to be estimated. This is not needed, however, e.g., $Z_{\text{edge}} \leftarrow \{(s,a) \in \hat{Z}_{\text{safe}}^{C} \;|s \in \hat{Z}_{\text{safe}}\}$ may be used.

Practically, as demonstrated in the algorithm, the set of similar state-action pairs may be determined iteratively. In an iteration, current goal policy $\pi_{\text{goal}}$ and set $Z_{\text{goal}}$ of goal-oriented actions may be determined. Based on this, a set $Z_{\text{edge}}$ may be defined as the intersection of $Z_{\text{goal}}$ and the set of all edge state-action pairs of the safe set $\hat{Z}_{\text{safe}}$. It may be desirable for state-action pairs of $Z_{\text{edge}}$ to be included in the safe set, to allow the safe set to be extended towards the goal. Accordingly, a set $Z_{\text{explore}} \subset \hat{Z}_{\text{safe}}$ of similar state-action pair may be determined based on set $Z_{\text{edge}}$.

In order to determine set $Z_{\text{explore}}$, safety may need to be established of unexplored state-action pairs $(s,a) \in Z_{\text{edge}}$. Conceptually, state-action pairs from $\hat{Z}_{\text{safe}}$ may be explored that are similar to *an unknown* return policy from $(s,a)$ in order to learn that *unknown* policy. Interestingly, as shown in the above algorithm, this may be done without exploring $\hat{Z}_{\text{safe}}$ exhaustively by performing a breadth-first-search from $(s,a)$. The breadth-first search, demonstrated by the while loop in the above pseudocode, may enumerate a superset of trajectories that contains the true return trajectories. For example, it may first enumerate a list of state-action pairs that are a 1-hop distance away and if any of them have a loose confidence interval, it may add to $Z_{\text{explore}}$ a corresponding similar state-action pair from $\hat{Z}_{\text{safe}}$ (if any exist). If $Z_{\text{explore}}$ is empty at this point, the algorithm may repeat this process for 2-hop distance, 3-hop distance and so on, for example, until either $Z_{\text{explore}}$ is non-empty or the BFS tree cannot be grown any further. Experiments have shown that this method is more effective than an exhaustive search, which is however also possible.

If no similar state-action pair to be performed is determined, in the above algorithm, all of $Z_{\text{edge}}$ may be added to $\hat{Z}_{\text{unsafe}}$. In the next iteration, $\pi_{\text{goal}}$ may be updated to ignore $\hat{Z}_{\text{unsafe}}$. The inventors were able to show that this iterative approach terminates in polynomial time, and when it does, either a non-empty $Z_{\text{explore}}$ is determined that can be explored by $\pi_{\text{explore}}$, or an updated $\pi_{\text{goal}}$ is determined in a way that $Z_{\text{goal}} \subset \hat{Z}_{\text{safe}}$.

Mathematical details of example policies $\pi_{\text{goal}}$, $\pi_{\text{explore}}$ and $\pi_{\text{switch}}$ for the above approach are now provided.

Given transition probabilities $\overset{\Delta}{T}$ and confidence interval widths $\overset{\Delta}{\epsilon}_T \colon S \times A \rightarrow \mathbb{R}$ as described herein, $T^{\dagger}$ may be referred to below as a **candidate** transition if it satisfies the following for all $(s,a) \in S \times A$:

1. $\| T^{\dagger}(s,a) - \overset{\Delta}{T}(s,a) \|_1 \leq \overset{\Delta}{\epsilon}_T(s,a).$

2. if for some $s'$, $\overset{\Delta}{T}(s,a,s') = 0$ and $\overset{\Delta}{\epsilon}_T(s,a) < \tau$, then $T^{\dagger}(s,a,s') = 0.$

3. if $(s,a) \in Z_0$, then $\forall s' \notin Z_0$, $T^{\dagger}(s,a,s') = 0$

$\overset{\Delta}{CI(T)}$ may be used below to denote the space of all candidate transition probabilities.

Given an MDP model of the physical environment, let $M^{\dagger}$ be an MDP that is the same as M but with an arbitrary reward function $R^{\dagger}$ and discount factor $\gamma^{\dagger}$. The optimistic state-action value function may be computed as follows:

$$\overline{Q}^{\dagger}(s,a,0) = 0$$

$$\overline{Q}^{\dagger}(s,a,1) = R^{\dagger}(s,a)$$

$$\overline{Q}^{\dagger}(s,a,t) = R^{\dagger}(s,a) + \gamma^{\dagger} \max_{T^{\dagger} \in CI(\overset{\Delta}{T})} \sum_{s' \in S} T^{\dagger}(s,a,s') \max_{a' \in A} \overline{Q}^{\dagger}(s',a',t-1), \ \forall t > 0.$$

As $t \to \infty$, $Q^{\dagger}(s,a,t)$ may converges to a value $Q^{\dagger}(s,a)$ since the above mapping is a contraction mapping. For ease of exposition, it will be assumed that these values are computed for an infinite horizon, e.g., $Q^{\dagger}(s,a)$ may be computed.

Let $T^{\dagger}$ denote the transition probability from $CI(\overset{\Delta}{T})$ that corresponds to the optimistic transitions that maximizes $Q^{\dagger}$. Also, let $M^{\dagger}$ denote the 'optimistic' MDP, $\langle S,A,T^{\dagger},R^{\dagger},\gamma^{\dagger} \rangle$.

**Goal MDP.**

$M_{\text{goal}}$ may defined as an MDP that is the same as M, but without the state-action pairs from $\hat{Z}_{\text{unsafe}}$, a set of state-action pairs labelled as unsafe. More concretely, $M_{\text{goal}} = \langle S,A,T,R_{\text{goal}},\gamma_{\text{goal}} \rangle$, where:

$$R_{\text{goal}}(s,a) = \begin{pmatrix} -\infty & (s,a) \in \hat{Z}_{\text{unsafe}} \\ R(s,a) & \text{otherwise.} \end{pmatrix}$$

$Q_{\text{goal}}$ may then be defined as the finite-horizon optimistic Q-value computed on $M_{\text{goal}}$, and $\pi_{\text{goal}}$ the policy dictated by the estimate of $Q_{\text{goal}}$. Also, let $T_{\text{goal}}$ denote the optimistic transition probability and $M_{\text{goal}}$ the optimistic MDP. Define $\overline{\rho}_{\text{goal}} := \rho_{\overline{\pi}_{\text{goal}},s_{\text{init}}}^{\overline{M}_{\text{goal}}}$, corresponding to the state distribution following the optimistic policy from the initial state in the optimistic MDP. For some $H > |S|$, define

$$\overline{Z}_{\text{goal}} := \{(s,a,H) \in S \times A : \overline{\rho}_{\text{goal}}(s,a) > 0.\}$$

In other words, $Z_{\text{goal}}$ may be a set of state-action pairs that have a positive probability of being reached while following the policy $\pi_{\text{goal}}$ from the initial state $s_{\text{init}}$ for $H$ steps. It may be shown that, if horizon $H > |S|$, then $\rho_{\text{goal}}(s',a',H) > 0$ if and only if $\rho_{\text{goal}}(s',a') > 0$, e.g., implying $Z_{\text{goal}} = \{(s,a,H) \in S \times A : \rho_{\text{goal}}(s,a) > 0\}$.

**Explore MDP.**

$M_{\text{explore}} = \langle S,A,T,R_{\text{explore}},\gamma_{\text{explore}} \rangle$ may be defined as an MDP with the same states, actions, and transition function as M, but with a different reward function, $R_{\text{explore}}$:

$$R_{\text{explore}}(s,a) = \begin{cases} 1 & (s,a) \in Z_{\text{explore}} \\ 0 & (s,a) \in \hat{Z}_{\text{safe}} \backslash Z_{\text{explore}} \\ -\infty & \text{otherwise.} \end{cases}$$

**Switch MDP.**

$M_{\text{switch}} = \langle S,A,T,R_{\text{switch}},\gamma_{\text{explore}} \rangle$ may be defined to be an MDP with the same states, actions, and transition function as $M$, but with a different reward function, $R_{\text{switch}}$, and discount factor. More specifically, $R_{\text{switch}}$ may be defined as follows:

$$R_{\text{switch}}(s,a) = \begin{cases} 1 & (s,a) \in \overline{Z}_{\text{goal}} \\ 0 & (s,a) \in \hat{Z}_{\text{safe}} \backslash \overline{Z}_{\text{goal}} \\ -\infty & \text{otherwise.} \end{cases}$$

Several illustrative examples of analogous state functions $\alpha\colon (S \times A \times S) \times (S \times A) \to S$ and pairwise state-action distance mappings $\Delta$ are now provided.

As a first illustrative example, a grid world domain may be considered with unsafe states, in which the interaction system receives a reward of -1 for any action and the episode terminates. A state s may be described by its coordinates on the 2-dimensional grid: $s = (x_s, y_s)$. The system starts on a $7 \times 7$ island of safe states and is surrounded by four $5 \times 5$ islands of safe states in all four directions, separated from the centre island by a one-state-thick line of dangerous states. The goal is placed on one of the surrounding islands. The system can take actions up, down, left, or right to move in those directions one step, or can take actions jump up, jump down, jump left, or jump right to move two steps, allowing the system to jump over dangerous states. There is a slipping probability of 60%, which causes the system to fall left or right of the intended target, 30% for either side.

The initial safe set provided to the system in this example, can be the whole centre island and all actions that with probability 1 will keep the system on the centre island. The distance function $\Delta$ provided to the system can be $\Delta((s,a), (\tilde{s},\tilde{a})) = 0$ if $a = \tilde{a}$ and s and $\tilde{s}$ are within 5 steps from each other (in $L_\infty$ norm) and $\Delta((s,a), (\tilde{s},\tilde{a})) = 1$ otherwise. As analogous state function, $\alpha((s,\cdot,s'), (\tilde{s},\cdot)) = (x_{s'} + (x_{\tilde{s}} - x_s), y_{s'} + (y_{\tilde{s}} - y_s))$ can be used, where the subscripts denote the state to which the attribute belongs.

As a second example, a discrete platformer-like domain may be considered. The state space comprises tuples $(x,y,\dot{x},\dot{y})$ where $x,y$ are the coordinates of the interaction system and $\dot{x},\dot{y}$ are the directional velocities of the system. The actions provided to the system are tuples $(\dot{x}_{\text{desired}},j)$ where $\dot{x}_{\text{desired}}$ is the desired x and ranges from -2 to 2, and $j$ is a boolean variable indicating whether or not the system should jump. While on the ground, at every step x changes by at most 1 in the direction of $\dot{x}_{\text{desired}}$ and if $j = 1$ then $\dot{y}$ is set to a value $\in \{1,2\}$ (otherwise $\dot{y}$ remains unchanged). While in the air, however, the system's actions have no effect and gravity decreases $\dot{y}$ by one at every step. When the system returns to the ground, $\dot{y}$ is set to 0. There are three types of surfaces in the environment: 1) concrete, 2) ice, and 3) sand. These surfaces change how high the system can jump. On concrete, when the system jumps, $\dot{y} = 2$ with probability 1; on ice $\dot{y} = 2$ with probability 0.5 and $\dot{y} = 1$ with probability 0.5; and on sand $\dot{y} = 1$ with probability 1.

The environment is arranged into three islands. The first island has all three surface materials from left to right: sand, ice, then concrete. The next two islands are just concrete, with the last one containing the goal state (where the reward is 1). The regions surrounding these islands are unsafe, meaning they produce rewards of -1 and are terminal. The islands are spaced apart such that the system must be on concrete to make the full jump to the next islands, and vice versa.

The initial safe set provided to the system in this example may be the whole first island and all actions that with probability 1 will keep the system on the centre island. The distance function $\Delta$ provided to the system may be $\Delta((s,a), (\tilde{s},\tilde{a})) = 0$ if $a = \tilde{a}$ and s and $\tilde{s}$ are either both in the air or both on the same type of surface and $\Delta((s,a), (\tilde{s},\tilde{a})) = 1$ otherwise. The analogous state function $\alpha$ may be $\alpha((s,\cdot,s'), (\tilde{s},\cdot)) = \tilde{s}'$ where $\tilde{s}'$ has the same $y, \dot{x},$ and $\dot{y}$ values as s' with the x value shifted by the x difference between s and $\tilde{s}$.

Several additional concrete embodiments for interacting with a physical environment using safe sets of state-action pairs are envisaged:

- The known $\varepsilon$-greedy algorithm for reinforcement learning may be adapted to perform safe exploration by restricting the allowable set of actions to a safe set of actions as described herein;

- The R-Max algorithm as disclosed in R. Brafman, and M. Tennenholtz, "R-max: A general polynomial time algorithm for near-optimal reinforcement learning", Journal of Machine Learning Research, 3(Oct), 2002 (incorporated herein by reference) may also be adapted to perform safe exploration by restricting the allowable set of actions to a safe set of actions as described herein.

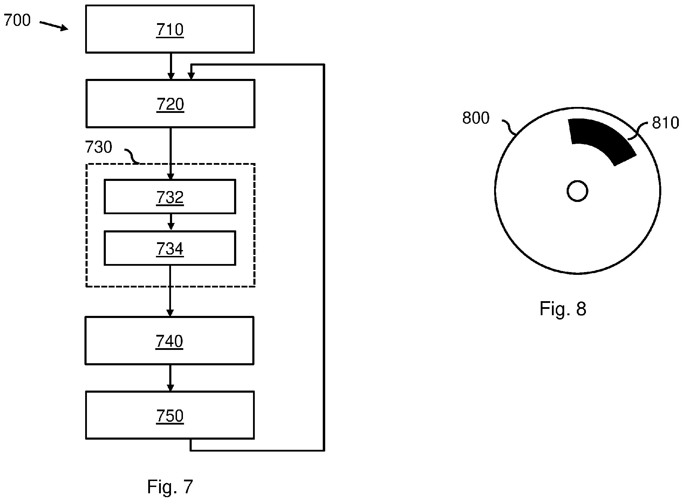

**Fig. 7** shows a block-diagram of computer-implemented method 700 of configuring a system which interacts with a physical environment. An action of the system in a state of the physical environment may result in an updated state of the physical environment according to a transition probability. The method 700 may correspond to an operation of the system 100 of Fig. 1. However, this is not a limitation, in that the method 700 may also be performed using another system, apparatus or device.

The method 700 may comprise, in an operation titled "ACCESSING SAFE SET, UNSAFE SET", accessing 710 data indicating a safe set of state-action pairs known to be safely performable and data indicating an unsafe set of state-action pairs to be avoided when interacting with the physical environment. The method 700 may further comprise iteratively controlling an interaction with the physical environment.

In an iteration 720-750, the method 700 may comprise, in an operation titled "OBTAINING CURRENT STATE", obtaining 720 data indicating a current state of the physical environment. In the iteration 720-750, the method 700 may comprise, in an operation titled "UPDATING SAFE SET", updating 730 the safe set of state-action pairs.

To update the safe set, method 700 may comprise, in an operation titled "ESTIMATING TRANSITION PROBABILITY BASED ON OTHER PAIR", estimating 732 a transition probability for a state-action pair based on an empirical transition probability of a similar other state-action pair. To update the safe set, method 700 may comprise, in an operation titled "INCLUDING PAIR IF SAFE", including 734 the state-action pair in the safe set of state-action pairs if the state-action pair is not labelled as unsafe and the safe set of state-action pairs can be reached with sufficient probability from the state-action pair based on the estimated transition probability.

In the iteration 720-750, the method 700 may comprise, in an operation titled "SELECTING ACTION FROM SAFE SET", selecting 740 an action to be performed in the current state of the physical environment from the safe set of state-action pairs. In the iteration 720-750, the method 700 may comprise, in an operation titled "PROVIDING ACTION", providing 750 the action to be performed to the system.

It will be appreciated that, in general, the operations of method 700 of Fig. 7 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 8,** instructions for the computer, e.g., executable code, may be stored on a computer readable medium 800, e.g., in the form of a series 810 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 8 shows an optical disc 800.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A computer-implemented method (700) of configuring a system which interacts with a physical environment, wherein an action of the system in a state of the physical environment results in an updated state of the physical environment according to a transition probability, the method comprising:

- accessing (710) data indicating a safe set of state-action pairs known to be safely performable and data indicating an unsafe set of state-action pairs to be avoided when interacting with the physical environment,
- iteratively controlling an interaction with the physical environment by, in iteration:

    - obtaining (720) data indicating a current state of the physical environment;
    - updating (730) the safe set of state-action pairs, comprising:

        - estimating (732) a transition probability for a state-action pair based on an empirical transition probability of a similar other state-action pair;
        - including (734) the state-action pair in the safe set of state-action pairs if the state-action pair is not labelled as unsafe and the safe set of state-action pairs can be reached with sufficient probability from the state-action pair based on the estimated transition probability;

    - selecting (740) an action to be performed in the current state of the physical environment from the safe set of state-action pairs;
    - providing (750) the action to be performed to the system.

**2.** The method (700) according to claim 1, wherein the system interacts with the physical environment according to a reward function, the method comprising, in an iteration, determining a goal-oriented action to be performed in the current state of the physical environment based on the reward function and selecting said action only if said action in the current state of the physical environment is comprised in the safe set of state-action pairs.

**3.** The method (700) according to claim 2, comprising determining a set of goal state-action pairs reachable by performing goal-oriented actions, and performing the goal-oriented action only if each goal state-action pair is comprised in the safe set of state-action pairs.

**4.** The method (700) according to claim 2 or 3, comprising selecting a similar state-action pair that is similar to a goal-oriented state-action pair not comprised in the safe set, and estimating transition probabilities for the goal-oriented state-action pair based on empirical transition probabilities of the similar state-action pair.

**5.** The method (700) according to any one of claims 2-4, comprising selecting a return state-action pair for returning to the set of goal state-action pairs.

**6.** The method (700) according to claim 1 or 2, comprising determining an action and raising an alert if the action is not comprised in the safe set of state-action pairs.

**7.** The method (700) according to any one of the preceding claims, comprising determining a similarity between a state-action pair and another state-action pair by comparing only portions of the respective states and/or actions relevant for transition probabilities.

**8.** The method (700) according to any one of the preceding claims, comprising, in at least one iteration, estimating a transition probability for a state-action pair for which no empirical transition probability is available and selecting said action to be performed.

**9.** The method (700) according to any one of the preceding claims, wherein estimating the transition probability for the state-action pair comprises:

    - determining similarities between the state-action pair and one or more other state-action pairs for which empirical transition probabilities are available;
    - selecting a most relevant other state-action pair based on at least the similarities; and
    - determining the estimated transition probability for the state-action pair based on the empirical transition probabilities of the selected other state-action pair.

**10.** The method (700) according to claim 9, further comprising determining confidence intervals of the empirical transition probabilities of the one or more other state-action pairs, the most relevant other state-action pair being selected based additionally on the determined confidence intervals.

**11.** The method (700) according to any one of the preceding claims, wherein the controlling of said interaction with the physical environment is performed in a training phase, the method further comprising controlling a further interaction with the physical environment in a use phase by repeatedly:

- obtaining a current state of the physical environment;
- selecting an action to be performed in the current state of the physical environment from the safe set of state-action pairs determined in the training phase; and
- providing the action to be performed to the system.

12. The method (700) according to any one of the preceding claims, wherein the data indicating the current state of the physical environment comprises sensor data of a computer-controlled device, the method further comprising determining control data for letting the computer-controlled device effect the selected action in the physical environment.

13. The method (700) according to claim 12, wherein the physical environment comprises objects to be avoided by the computer-controlled device, and wherein state-action pairs are defined as sufficiently similar regardless of the objects to be avoided.

14. A configuration system (100,200) for configuring an interaction system (200) which interacts with a physical environment, wherein an action of the interaction system in a state of the physical environment results in an updated state of the physical environment according to a transition probability, the configuration system comprising:

- a data interface (120) for accessing data (040) indicating a safe set of state-action pairs known to be safely performable and data (030) indicating an unsafe set of state-action pairs to be avoided when interacting with the physical environment,
- a processor subsystem (140) configured to iteratively control an interaction of the interaction system with the physical environment by, in an iteration:

- obtaining, from the interaction system, data indicating a current state of the physical environment;
- updating the safe set of state-action pairs, comprising:

- estimating a transition probability for a state-action pair based on an empirical transition probability of a similar other state-action pair;
- including the state-action pair in the safe set of state-action pairs if the state-action pair is not labelled as unsafe and the safe set of state-action pairs can be reached with sufficient probability from the state-action pair based on the estimated transition probability;

- selecting an action to be performed in the current state of the physical environment from the safe set of state-action pairs;
- providing the action to be performed to the interaction system.

15. A computer-readable medium (800) comprising transitory or non-transitory data (810) representing instructions which, when executed by a processor system, cause the processor system to perform the computer-implemented method according to claim 1.

Amended claims in accordance with Rule 137(2) EPC.

1. A computer-implemented method (700) of configuring a system which interacts with a physical environment, wherein an action of the system in a state of the physical environment results in an updated state of the physical environment according to a transition probability, the method comprising:

- accessing (710) data indicating a safe set of state-action pairs known to be safely performable and data indicating an unsafe set of state-action pairs to be avoided when interacting with the physical environment,
- while the system interacts with the physical environment, maintaining empirical transition probabilities of state-action pairs resulting in updated states,
- iteratively controlling an interaction with the physical environment by, in an iteration:

- obtaining (720) data indicating a current state of the physical environment;
- updating (730) the safe set of state-action pairs, comprising:

- estimating (732) an estimated transition probability for a state-action pair based on an empirical transition probability of a similar other state-action pair;
- including (734) the state-action pair in the safe set of state-action pairs if the state-action pair is not labelled as unsafe and the safe set of state-action pairs can be reached with sufficient probability from the state-action pair based on the estimated transition probability;
- selecting (740) an action to be performed in the current state of the physical environment from the safe set of state-action pairs;
- providing (750) the action to be performed to the system.

2. The method (700) according to claim 1, wherein the system interacts with the physical environment according to a reward function, the method comprising, in an iteration, determining a goal-oriented action to be performed in the current state of the physical environment based on the reward function and selecting said action only if said action in the current state of the physical environment is comprised in the safe set of state-action pairs.

3. The method (700) according to claim 2, comprising determining a set of goal state-action pairs reachable by performing goal-oriented actions, and performing the goal-oriented action only if each goal state-action pair is comprised in the safe set of state-action pairs.

4. The method (700) according to claim 2 or 3, comprising selecting a similar state-action pair that is similar to a goal-oriented state-action pair not comprised in the safe set, and estimating transition probabilities for the goal-oriented state-action pair based on empirical transition probabilities of the similar state-action pair.

5. The method (700) according to any one of claims 2-4, comprising selecting a return state-action pair for returning to the set of goal state-action pairs.

6. The method (700) according to claim 1 or 2, comprising determining an action and raising an alert if the action is not comprised in the safe set of state-action pairs.

7. The method (700) according to any one of the preceding claims, comprising determining a similarity between a state-action pair and another state-action pair by comparing only portions of the respective states and/or actions relevant for transition probabilities.

8. The method (700) according to any one of the preceding claims, comprising, in at least one iteration, estimating a transition probability for a state-action pair for which no empirical transition probability is available and selecting said action to be performed.

9. The method (700) according to any one of the preceding claims, wherein estimating the transition probability for the state-action pair comprises:

   - determining similarities between the state-action pair and one or more other state-action pairs for which empirical transition probabilities are available;
   - selecting a most relevant other state-action pair based on at least the similarities; and
   - determining the estimated transition probability for the state-action pair based on the empirical transition probabilities of the selected other state-action pair.

10. The method (700) according to claim 9, further comprising determining confidence intervals of the empirical transition probabilities of the one or more other state-action pairs, the most relevant other state-action pair being selected based additionally on the determined confidence intervals.

11. The method (700) according to any one of the preceding claims, wherein the controlling of said interaction with the physical environment is performed in a training phase, the method further comprising controlling a further interaction with the physical environment in a use phase by repeatedly:

   - obtaining a current state of the physical environment;
   - selecting an action to be performed in the current state of the physical environment from the safe set of state-action pairs determined in the training phase; and
   - providing the action to be performed to the system.

**12.** The method (700) according to any one of the preceding claims, wherein the data indicating the current state of the physical environment comprises sensor data of a computer-controlled device, the method further comprising determining control data for letting the computer-controlled device effect the selected action in the physical environment.

**13.** The method (700) according to claim 12, wherein the physical environment comprises objects to be avoided by the computer-controlled device, and wherein state-action pairs are defined as sufficiently similar regardless of the objects to be avoided.

**14.** A configuration system (100,200) for configuring an interaction system (200) which interacts with a physical environment, wherein an action of the interaction system in a state of the physical environment results in an updated state of the physical environment according to a transition probability, the configuration system comprising:

- a data interface (120) for accessing data (040) indicating a safe set of state-action pairs known to be safely performable and data (030) indicating an unsafe set of state-action pairs to be avoided when interacting with the physical environment,
- a processor subsystem (140) configured to, while the interaction system interacts with the physical environment, maintain empirical transition probabilities of state-action pairs resulting in updated states, and to iteratively control an interaction of the interaction system with the physical environment by, in an iteration:

   - obtaining, from the interaction system, data indicating a current state of the physical environment;
   - updating the safe set of state-action pairs, comprising:

      - estimating an estimated transition probability for a state-action pair based on an empirical transition probability of a similar other state-action pair;
      - including the state-action pair in the safe set of state-action pairs if the state-action pair is not labelled as unsafe and the safe set of state-action pairs can be reached with sufficient probability from the state-action pair based on the estimated transition probability;
      - selecting an action to be performed in the current state of the physical environment from the safe set of state-action pairs;
      - providing the action to be performed to the interaction system.

**15.** A computer-readable medium (800) comprising transitory or non-transitory data (810) representing instructions which, when executed by a processor system, cause the processor system to perform the computer-implemented method according to claim 1.

Fig. 1

Fig. 2

Fig. 3

Fig. 4

Fig. 5

Fig. 6

700 →

| 710 |
|:---:|

| 720 |
|:---:|

730

| 732 |
|:---:|

| 734 |
|:---:|

| 740 |
|:---:|

| 750 |
|:---:|

Fig. 7

800   810

Fig. 8

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 494 980 B2 (HANS ALEXANDER [DE]; SCHNEEGABETA DANIEL [NL] ET AL.) 23 July 2013 (2013-07-23) * column 4, line 59 - column 16, line 22 * * figures 1-4 * | 1-15 | INV. B25J9/16 G05B13/02 |
| X | US 2016/260027 A1 (KUWABARA NOBUAKI [JP] ET AL) 8 September 2016 (2016-09-08) * paragraphs [0025] - [0101] * * figures 1-15 * | 1-15 | |
| X | ALEXANDER HANS ET AL: "Sichere Exploration für Reinforcement-Learning-basierte Regelung", PROCEEDINGS / 17. WORKSHOP COMPUTATIONAL INTELLIGENCE: DORTMUND, 5- 7 DEZEMBER 2007, UNIV.-VERL, KARLSRUHE , 1 January 2007 (2007-01-01), pages 1-15, XP002517778, ISBN: 978-3-86644-191-0 Retrieved from the Internet: URL:http://www.inb.uni-lueback.de:8084/ schneega/sichere_exploration.pdf [retrieved on 2020-06-08] * paragraphs [0001] - [0003] * | 1-15 | TECHNICAL FIELDS SEARCHED (IPC) B25J G05B |
| A | WO 2019/178147 A1 (VIRGINIA POLYTECHNIC INSTITUTE AND STATE UNIV [US]) 19 September 2019 (2019-09-19) * figures 1-3,5,7-14 * * paragraphs [0027] - [0091] * * paragraphs [0107] - [0117] * | 1-15 | |

The present search report has been drawn up for all claims

| Place of search | Date of completion of the search | Examiner |
|---|---|---|
| The Hague | 8 June 2020 | Groen, Fokke |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 21 9055

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2020

| Patent document cited in search report | | Publication date | Patent family member(s) | | Publication date |
|---|---|---|---|---|---|
| US 8494980 | B2 | 23-07-2013 | CN | 101842754 A | 22-09-2010 |
| | | | DE | 102008007700 A1 | 07-05-2009 |
| | | | EP | 2206023 A1 | 14-07-2010 |
| | | | JP | 5130374 B2 | 30-01-2013 |
| | | | JP | 2011505030 A | 17-02-2011 |
| | | | US | 2010241243 A1 | 23-09-2010 |
| | | | WO | 2009056416 A1 | 07-05-2009 |
| US 2016260027 | A1 | 08-09-2016 | JP | 6494331 B2 | 03-04-2019 |
| | | | JP | 2016159407 A | 05-09-2016 |
| | | | US | 2016260027 A1 | 08-09-2016 |
| WO 2019178147 | A1 | 19-09-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. STREHL ; M. LITTMAN.** An analysis of model-based Interval Estimation for Markov Decision Processes. *Journal of Computer and System Sciences,* 2008, vol. 74, 1309-1331

- **R. BRAFMAN ; M. TENNENHOLTZ.** R-max: A general polynomial time algorithm for near-optimal reinforcement learning. *Journal of Machine Learning Research,* 03 October 2002